# DEMANDE DE BREVET EUROPEEN

(11) **EP 4 752 046 A1**
(43) Date de publication de la demande: **03.06.2026**
(21) Numéro de dépôt: 25218884.2
(22) Date de dépôt: 26.11.2025
(51) Int. Cl.: B64C 1/14

(54) **DISPOSITIF DE VERROUILLAGE POUR PORTE D'UN AÉRONEF, AVEC VERROU DOUBLE EN FORME DE C**

(30) Priorité: 29.11.2024 FR 2413242
(71) Demandeur: AIRBUS OPERATIONS (S.A.S.), 31060 Toulouse (FR)
(72) Inventeur: PHALIPPOU, Jérôme, 31060 Toulouse (FR); TIZAC, Laurent, 31060 Toulouse (FR); LIEVEN, Patrick, 31060 Toulouse (FR); TONNELE, Arnaud, 31060 Toulouse (FR); BROCHARD, Frédéric, 31060 Toulouse (FR)
(74) Mandataire: BCF Global

(57) **Abrégé**

L'invention concerne un dispositif de verrouillage pour une porte (P) d'un aéronef (Ae), comprenant une partie mâle (2), et une partie femelle (3), la partie mâle comprenant une tige (4) s'étendant le long d'un axe longitudinal (L-4), la partie femelle (3) s'étendant le long d'un axe longitudinal (L-3), la partie femelle (3) comprenant un logement (20) de la partie mâle (2) et un premier verrou (18) et un deuxième verrou (19) de la partie mâle (2), dit verrous en C, chacun comportant une couronne ouverte, la partie femelle (3) étant pivotante autour de la partie mâle entre une position de déverrouillage de la porte, et une position de verrouillage de la porte, l'axe longitudinal de la partie mâle et l'axe longitudinal de la partie femelle coïncidant dans la position de verrouillage, les verrous en C étant disposés de part et d'autre d'une zone intermédiaire de la tige en position de verrouillage.

## Description

### Domaine technique

La présente invention se rapporte à un dispositif de verrouillage pour une porte d'un aéronef.

### Technique antérieure

Une porte d'aéronef, pour être appropriée à l'utilisation dans les avions de ligne modernes, doit répondre à de nombreuses exigences et spécifications de certification. Notamment, la porte d'un aéronef doit comporter un dispositif de verrouillage qui fixe la porte d'aéronef dans sa position de fermeture lors de la navigation aérienne de l'aéronef. Pour ce faire, la porte peut être munie d'un dispositif de verrouillage comprenant un verrou en forme de crochet ou de C. Un verrou en forme de C comporte en général une couronne ouverte qui tourne autour d'un axe pour verrouiller et déverrouiller la porte. Néanmoins, un tel verrou en C génère des bras de levier, qui créent des moments de flexion et soumettent l'aéronef à des contraintes supplémentaires dont on doit s'affranchir. Sur de grandes portes d'avions cargo, les sollicitations sur les dispositifs de verrouillage (pressurisation, flexion du fuselage...) sont telles qu'on ajoute des renforts structurels pénalisants, ce qui rend l'utilisation en C moins attractive qu'un système à crochets, en terme de poids par exemple.

Le but de l'invention est de remédier au moins partiellement à cet inconvénient.

### Résumé

A cet effet, il est proposé un dispositif de verrouillage pour une porte d'un aéronef, comprenant une première partie, dite partie mâle, et une deuxième partie, dite partie femelle, la partie mâle comprenant une tige comportant une zone intermédiaire entre deux extrémités et s'étendant le long d'un axe longitudinal, dit axe de la partie mâle, la partie femelle s'étendant le long d'un axe longitudinal, dit axe de la partie femelle, la partie femelle comprenant un logement de réception de la partie mâle et un premier verrou et un deuxième verrou de la partie mâle, dit verrous en C, chacun comportant une couronne ouverte, la partie femelle étant montée pivotante autour de la partie mâle entre une position de déverrouillage de la porte, dans laquelle la tige est libre d'être extraite du logement de la partie femelle, et une position de verrouillage de la porte, dans laquelle la tige est maintenue par chacun des verrous en C dans le logement de réception de la partie mâle, l'axe longitudinal de la partie mâle et l'axe longitudinal de la partie femelle coïncidant dans la position de verrouillage, les verrous en C étant disposés de part et d'autre de la zone intermédiaire de la tige en position de verrouillage.

Grâce au verrou double en C du dispositif selon la présente invention, on peut réaligner des fibres du cadre de porte de l'aéronef et la tige de la partie mâle et supprimer tout moment de flexion néfaste. Sur de grandes portes cargo, par exemple, le verrou double en C évite de recourir à des renforts structurels et réduit de façon non négligeable le poids du dispositif de verrouillage, et de la structure fixe associée, tout en assurant une grande compacité du dispositif de verrouillage.

Selon un autre aspect, en position de verrouillage, les verrous en C sont disposés de part et d'autre de la zone intermédiaire de la tige de façon symétrique.

Selon un autre aspect, en position de verrouillage, les verrous en C sont disposés symétriquement dans un plan orthogonal à l'axe longitudinal de la tige et contenant le milieu de la tige.

Selon un autre aspect, chacun des verrous est indépendant de l'autre.

Selon un autre aspect, la partie femelle est un barillet, le logement de réception de la partie mâle s'étendant entre les deux verrous en C, chacun des verrous en C formant une extrémité opposée du barillet.

Selon un autre aspect, le dispositif de verrouillage comprend un moyen de commande du pivotement de la partie femelle.

Selon un autre aspect, le dispositif de verrouillage comprend un moyen de verrouillage de la partie femelle en position de verrouillage.

L'invention a également pour objet un ensemble de porte, comprenant une porte munie de l'une de la partie femelle et de la partie mâle du dispositif de verrouillage tel que décrit précédemment, et une partie fixe munie de l'autre de la partie mâle et de la partie femelle du dispositif de verrouillage tel que décrit précédemment.

Selon un autre aspect, en position de verrouillage, les parties femelle et mâle sont disposées de sorte à annuler tout moment de flexion sur le dispositif de verrouillage.

L'invention a également pour objet un aéronef muni d'un ensemble de porte tel que décrit précédemment, la partie fixe de l'ensemble de porte étant une partie de fuselage de l'aéronef.

### Brève description des dessins

D'autres caractéristiques, détails et avantages apparaîtront à la lecture de la description détaillée ci-après, et à l'analyse des dessins annexés, sur lesquels :
**Fig. 1**

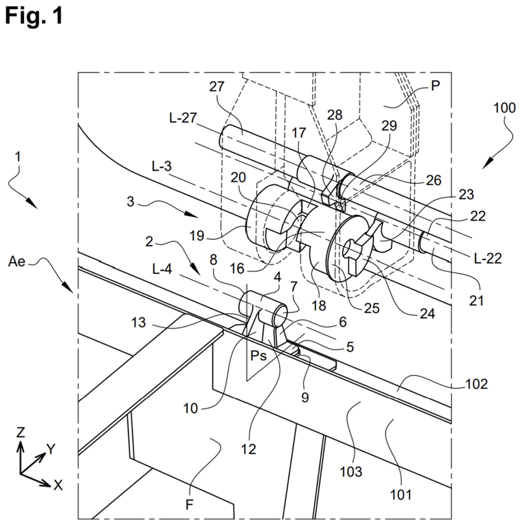

   [Fig. 1] est une vue schématique en perspective d'un ensemble de porte d'un aéronef muni d'un dispositif de verrouillage selon la présente invention.
**Fig. 2**

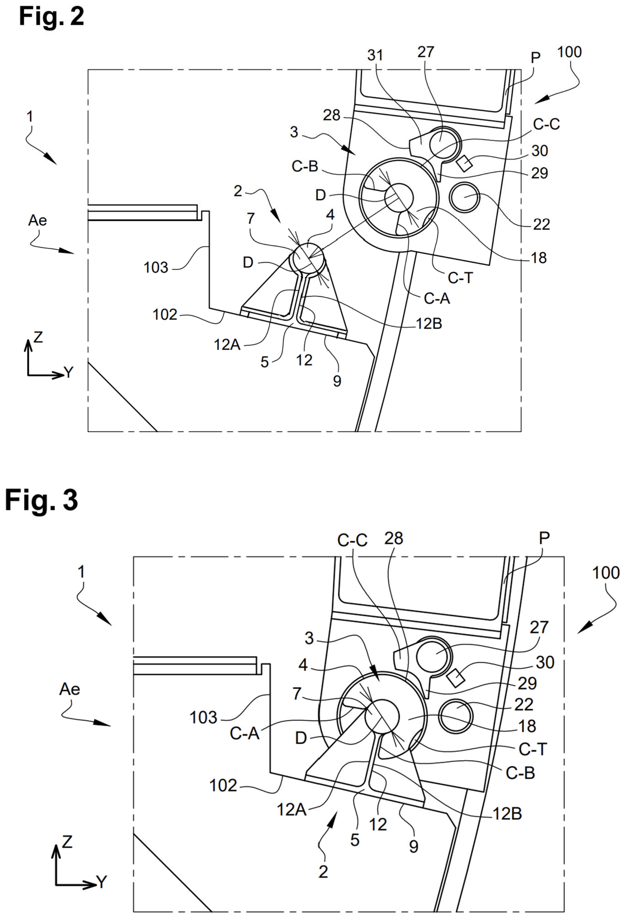

   [Fig. 2] est une vue schématique en coupe transversale de l'ensemble de la figure 1 dans un état d'ouverture de la porte.
**Fig. 3**
   [Fig. 3] est vue schématique en coupe transversale de l'ensemble de la figure 2 dans un état de fermeture de la porte, le dispositif de verrouillage étant dans une position dite déverrouillée.
**Fig. 4**

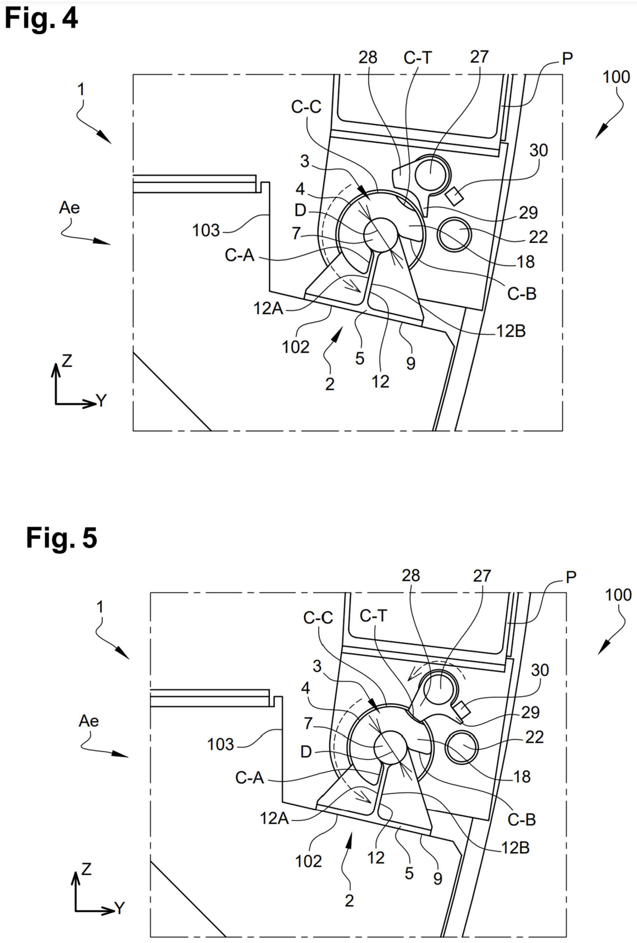

   [Fig. 4] est une vue schématique transversale de l'ensemble de la figure 3 dans un état de fermeture de la porte, le dispositif de verrouillage étant dans une position dite verrouillée non bloquée.
**Fig. 5**
   [Fig. 5] est une vue schématique transversale de l'ensemble de la figure 4 dans un état de fermeture de la porte, le dispositif de verrouillage étant dans une position dite verrouillée bloquée.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que la personne du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en oeuvre relativement simplifiées de la présente invention. Comme la personne du métier le comprend, d'autres mises en oeuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et la personne du métier pourra apporter d'autres modifications tout en restant dans le cadre de la présente invention.

En outre, toutes les déclarations ci-après relatives aux principes, aspects et mises en oeuvre de la présente invention, ainsi que les exemples spécifiques de celle-ci, visent à englober à la fois les équivalents structurels et fonctionnels de celle-ci, qu'ils soient actuellement connus ou développés à l'avenir.

Comme visible sur les figures, l'invention a pour objet un dispositif de verrouillage 1 destiné à équiper un aéronef Ae pour la fermeture d'une porte P de l'aéronef, ainsi qu'un ensemble de porte 100 de l'aéronef Ae. L'invention a également pour objet l'aéronef Aé muni de l'ensemble de porte 100. Sur les figures, l'ensemble de porte comprend un seul dispositif de verrouillage 1. Néanmoins, l'invention n'est pas limitée à cette configuration, et l'ensemble de porte peut comprendre autant de dispositifs de verrouillage 1 que nécessaire.

On note que la présente invention s'applique aux portes passager, et au portes cargo d'un aéronef, particulièrement avantageusement pour une porte cargo.

Pour simplifier la lecture de la présente description, on a illustré un repère orthonormé (X, Y, Z) sur les figures. La direction X correspond à un axe de pivotement de la porte P choisi préférentiellement, mais non limitativement, horizontal lorsque l'aéronef est au sol. Les directions Y et Z sont orthogonales à la direction X, la direction Z étant verticale en position horizontale de l'aéronef.

Comme il ressort des figures, le dispositif de verrouillage 1 comprend une première partie 2, dite partie mâle, ou goupille, destinée à être solidaire d'un encadrement de porte 101 de l'ensemble 100. Le dispositif de verrouillage 1 comprend également une deuxième partie 3, dite partie femelle, destinée à être solidaire de la porte P de l'ensemble 100.

L'ensemble 100 comprend le dispositif de verrouillage 1, la porte P et l'encadrement de porte 101. L'encadrement de la porte comprend un premier rail longitudinal 102 du fuselage F de l'aéronef Ae. Le rail 102 s'étend par exemple dans un plan (X, Y) et un deuxième rail 103, formant un angle non nul avec le premier rail 102, s'étendant par exemple dans un plan (Y, Z).

Sur les figures, la porte P est montée pivotante entre un état dit d'ouverture et un état dit de fermeture. En état d'ouverture, la porte P est disposée à distance de l'encadrement 101. En état de fermeture, la porte P est disposée contre l'encadrement de porte. L'état d'ouverture est illustré sur les figures 1 et 2. L'état de fermeture est illustré sur les figures 3, 4 et 5.

Quand la porte P est fermée, la partie mâle 2 du dispositif de verrouillage 1 est logée dans la partie femelle 3 et la partie femelle 3 se déplace, par rotation, entre une position de déverrouillage de la porte (figure 3) et une position de verrouillage et de blocage (figure 5) de la porte, comme il sera détaillé ultérieurement.

On décrit ci-après en détail la partie mâle 2 du dispositif de verrouillage 1.

Comme particulièrement visible sur la figure 1, la partie mâle 2 comprend une tige 4, destinée à être logée dans la partie femelle 3 du dispositif de verrouillage 1. La partie mâle 2 comprend également un socle 5, destiné à être posé sur le rail 102 de l'encadrement 101 de la porte P, et une partie intermédiaire 6 de solidarisation de la tige 4 au socle 5.

Sur les figures, la tige 4 est droite, d'axe longitudinal L-4, et de section circulaire, comprenant une zone intermédiaire Z s'étendant entre deux extrémités opposées 7 et 8. L'axe L-4 est de préférence parallèle à l'axe X de pivotement de la porte P. Plus généralement, l'orientation de la tige 4 est choisie pour que la tige 4 s'insère dans la partie femelle 3, comme il sera détaillé ultérieurement.

Sur les figures, le socle 5 présente une forme de base plate, à l'opposé de la tige 4, pour permettre une fixation de la partie mâle 2 par tout type de moyen au rail 102 du fuselage F, et par exemple par vissage. La partie 6 permet l'orientation de la tige 4 pour que les parties mâle 2 et femelle 3 se retrouvent dans une orientation dans laquelle le dispositif de verrouillage 1 fonctionne, c'est-à-dire telle que la tige 4 soit logée dans la partie femelle 3 en position de verrouillage du dispositif de verrouillage.

Avantageusement, le dispositif de verrouillage 1 comprend un jeu de cales 9 pour le réglage en Z de la partie mâle 2, de différentes épaisseurs, et de cales striées (les stries ne sont pas visibles sur les figures) pour le réglage en Y de la partie mâle 2, afin de bien positionner la tige 2 relativement à la partie femelle 3. Bien entendu, tout autre système de réglage approprié est envisageable.

Le socle 5 est surmonté de la partie intermédiaire 6 de forme générale, et non limitative, de pyramide tronquée.

Comme il ressort également des figures, la partie mâle 2 comprend une nervure de rigidification 10 sous forme d'une aile s'étendant depuis le milieu de la tige 4.

La partie intermédiaire 6 comprend une portion plane 12, la nervure 10 s'étendant sensiblement orthogonalement à la portion 12, dans un plan (X, Z), entre la nervure 10 et l'extrémité 7.

La partie intermédiaire 6 comprend également une portion plane 13 s'étendant sensiblement orthogonalement à la nervure 10, dans un plan (X, Z), entre la nervure 10 et l'extrémité 8.

La portion plane 12, 13 sont conformées pour former support d'un verrou respectif de la partie femelle 3, comme il sera détaillé ultérieurement. Les portions planes 12, 13 sont par la suite appelées portions de support 12, 13. Les portions de support 12, 13 présentent une face de support A disposée en regard de l'intérieur de l'aéronef Ae, c'est-à-dire face au rail 103, et une face de support B disposée en regard de l'extérieur de l'aéronef Ae. Sur les figures 2 à 5, on a référencé les faces 12A et 12B de la partie mâle 2.

On décrit maintenant en détail la partie femelle 3 du dispositif de verrouillage 1.

Comme particulièrement visible sur la figure 1, la partie femelle 3 est destinée à être installée dans une monture de la porte P.

Sur le mode de réalisation illustré, la partie femelle 3 est un barillet comprenant un corps 16 muni d'une partie centrale 17 s'étendant entre deux extrémités opposées 18, 19. Chacune des extrémités 18, 19 présente une forme de couronne ouverte, en C, formant un verrou de la partie mâle 2. La partie centrale 17 présente une forme de logement cylindrique 20 dimensionné pour recevoir la tige 4 de la partie mâle 2.

En d'autres termes, le corps 16 est creusé longitudinalement dans sa partie centrale 17 longitudinalement de manière à former les deux verrous 18, 19 en forme de C.

On note L-3 l'axe longitudinal de la partie femelle 3.

Le logement cylindrique 20 présente un diamètre D sensiblement égal au diamètre D de la tige 4 de sorte que la tige 4 est maintenue dans la partie femelle 3 quand la porte est fermée.

Chacune des couronnes 18, 19 s'étend orthogonalement à l'axe longitudinal L-3. Dans un plan (Y, Z), l'ouverture de chaque couronne 18, 19 est un secteur angulaire formant le C du verrou. On note C-A et C-B les deux branches d'extrémité du C connectées l'une à l'autre par un contour longitudinal C-C. Les branches C-A et C-B du verrou 18 sont conformées pour coopérer avec la portion de support 12, comme il sera détaillé ultérieurement. Le contour longitudinal C-C présente une forme en arc-de-cercle muni d'un creux ou retrait C-T pour coopérer avec un moyen de verrouillage du dispositif 1, comme il sera détaillé ultérieurement. Un diamètre interne D de chaque couronne 18, 19 est égal au diamètre de la tige 4 de sorte que, lorsque la partie mâle 2 est installée dans la partie femelle 3, les extrémités 7, 8 de la tige 4 reposent respectivement dans le verrou 18, 19.

Sur le mode de réalisation illustré, la partie femelle 3 vient d'un bloc, et les verrous 18 et 19 sont liés l'un à l'autre. L'invention n'est pas limitée à ce mode de réalisation, et les deux verrous 18, 19 peuvent être indépendants l'un de l'autre.

Comme il ressort des figures, les verrous en C 18, 19 sont disposés de part et d'autre d'un milieu de la tige 4 en position de verrouillage. Les verrous en C sont disposés symétriquement dans un plan orthogonal à l'axe longitudinal de la tige L-4 et contenant la zone intermédiaire Z. Sur le mode de réalisation illustré, les verrous en C sont disposés symétriquement dans un plan Ps orthogonal à l'axe de la tige L-4 et contenant le milieu de la tige.

Comme il ressort de la cinématique des figures 2 à 5, la partie femelle 3 est montée pivotante entre la position de déverrouillage de la porte P, illustrée sur les figures 2 et 3, et la position de verrouillage de la porte P, illustrée sur les figures 4 et 5.

Le dispositif de verrouillage 1 comprend un moyen 21 de commande du mouvement de la partie femelle 3.

Sur le mode de réalisation illustré, le moyen de commande 21 comprend un actionneur 22, sous forme d'une tige d'axe longitudinal L-22. Un secteur angulaire denté 23 est fixé au contour de la tige d'actionnement 22. La tige 22 est conformée pour pivoter autour de son axe L-22, ce qui entraine en rotation le secteur angulaire 23. Le secteur 23 est conformé pour engrener un secteur angulaire denté 24 d'une roue 25 solidaire en rotation de la partie femelle 3. Sur les figures, la roue 25 est solidaire du verrou 18. L'axe longitudinal L-22 est parallèle à l'axe longitudinal L-3 de la partie femelle 3.

Ainsi, l'actionnement de la tige 22 fait tourner chacun des verrous 18, 19 autour de l'axe longitudinal L-3 de la partie femelle 3 entre la position déverrouillée, dans laquelle la branche C-B du C fait face à la face B de la portion plane respective 12, 13 et la position verrouillée, dans laquelle la branche du C-A du C fait face à la face A de la portion respective 12, 13.

On note que, pour un mode de réalisation dans lequel les verrous 18, 19 sont indépendants, le moyen de commande doit commander en rotation chacun des verrous 18, 19.

On note également que l'invention ne se limite pas à une commande par roues dentées engrenées et comprend également tout type de commande qui permet aux verrous 18, 19 de pivoter autour de l'axe L-3.

Comme également visible sur les figures, le dispositif de verrouillage 1 comprend également un moyen de blocage 26 de chacun des verrous 18, 19 dans la position verrouillée.

Le moyen de blocage 26 comprend un axe ou tige 27 de verrouillage d'axe longitudinal noté L-27. De préférence, l'axe L-27 est parallèle à l'axe L-22. L'axe 27 est conformé pour tourner autour de son axe longitudinal L-27. L'axe 27 présente une butée 28 dont la forme est en adéquation avec la forme du retrait C-T du verrou 18, de sorte que la butée 28 est disposée dans le retrait C-T du verrou 18 lorsque le dispositif de verrouillage est en position de blocage, comme il va être expliqué. Le moyen de blocage 26 comprend également un limiteur de mouvement 29 conformé pour être stoppé par un arrêt 30 en position de verrouillage et blocage du dispositif de verrouillage 1.

Sur le mode de réalisation illustré, et non limitativement, la butée 28 et le limiteur de mouvement 29 sont des pattes faisant saille radialement hors d'une même pièce 31. La pièce 31 est solidaire en rotation de l'axe 27.

Ainsi, l'actionnement du moyen de blocage 26 fait tourner la pièce 31 orthogonalement à l'axe L-27, ce qui fait pivoter les pattes 28, 29 entre une position de déblocage du dispositif 1, dans laquelle les pattes 28, 29 sont à distance respectivement du retrait C-T et de l'arrêt 30, et une position de blocage, la patte 28 étant disposée dans le retrait C-T et la patte 29 stoppée contre l'arrêt 30, le moyen de commande 20 ayant au préalable pivoté en position de verrouillage.

Lorsqu'il y a deux verrous en C indépendants, deux butées sont à prévoir.

Ainsi, le pivotement du moyen de commande 22 déplace le dispositif de verrouillage 1 entre la position de déverrouillage (figures 1 à 3) et la position de verrouillage (figures 4 et 5), et le moyen de blocage 26 déplace le dispositif de verrouillage 1 entre la position de déblocage (figures 1 à 4) et de blocage (figure 5).

On note que l'invention ne se limite pas au moyen de blocage illustré, et tout autre moyen adapté peut être utilisé. Par exemple, les pattes 28 et 29 peuvent être séparées l'une de l'autre, attachées indépendamment à la tige 27.

Le dispositif 1 selon la présente invention est à la fois compact, simple (avec peu de pièces) et léger. Le dispositif 1 selon la présente invention transforme la serrure de la porte P en serrure « en T », ce qui permet de recourir au verrou double en C, aligne les fibres naturelles du cadre F au dispositif 1 et évite de générer des moments de flexion. Le dispositif 1 travaille en traction pure. Grâce au dispositif 1, on peut éviter d'utiliser des renforts sur les verrous en C et sur la structure fixe, ce qui réduit la masse du dispositif 1 tout en maintenant la compacité de la serrure de la porte P.

Des modifications et des améliorations aux mises en oeuvre décrites ci-dessus de la présente invention peuvent apparaître à la personne du métier. En particulier, les modes de réalisation et variantes décrites sont combinables dans la mesure où ils ne sont pas incompatibles. La description ci-dessus est illustrative au travers d'exemples plutôt que limitative. La portée de la présente invention est donc limitée uniquement par la portée des revendications ci-dessous.

## Revendications

1. Ensemble de porte, comprenant une porte (P) pour un aéronef (Ae) comprenant une première partie (2), dite partie mâle, et une deuxième partie (3), dite partie femelle, la partie mâle comprenant une tige (4) comportant une zone intermédiaire entre deux extrémités et s'étendant le long d'un axe longitudinal (L-4), dit axe de la partie mâle (2), la partie femelle (3) s'étendant le long d'un axe longitudinal (L-3), dit axe de la partie femelle, la partie femelle (3) comprenant un logement (20) de réception de la partie mâle (2) et un premier verrou (18) et un deuxième verrou (19) de la partie mâle (2), dit verrous en C, chacun comportant une couronne ouverte, la partie femelle (3) étant montée pivotante autour de la partie mâle entre une position de déverrouillage de la porte, dans laquelle la tige est libre d'être extraite du logement de la partie femelle, et une position de verrouillage de la porte, dans laquelle la tige est maintenue par chacun des verrous en C dans le logement (20) de réception de la partie mâle (2), l'axe longitudinal de la partie mâle et l'axe longitudinal de la partie femelle coïncidant dans la position de verrouillage, les verrous en C étant disposés de part et d'autre de la zone intermédiaire de la tige en position de verrouillage, la porte (P) étant munie de l'une de la partie femelle (3) et de la partie mâle (2) du dispositif de verrouillage (1), et une partie fixe (101) munie de l'autre de la partie mâle (2) et de la partie femelle (3) du dispositif de verrouillage.

2. Ensemble de porte selon la revendication 1, dans lequel, en position de verrouillage, les verrous en C (18, 19) sont disposés de part et d'autre de la zone intermédiaire de la tige de façon symétrique.

3. Ensemble de porte selon la revendication 2, dans lequel, en position de verrouillage, les verrous en C (18, 19) sont disposés symétriquement dans un plan (Ps) orthogonal à l'axe longitudinal de la tige et contenant le milieu de la tige.

4. Ensemble de porte selon l'une des revendications précédentes, dans lequel chacun des verrous (18, 19) est indépendant de l'autre.

5. Ensemble de porte selon l'une des revendications précédentes, dans lequel la partie femelle (3) est un barillet (16), le logement de réception de la partie mâle s'étendant entre les deux verrous en C, chacun des verrous en C formant une extrémité opposées du barillet.

6. Ensemble de porte selon l'une des revendications précédentes, comprenant un moyen de commande (21) du pivotement de la partie femelle (3).

7. Ensemble de porte selon l'une des revendications précédentes, comprenant un moyen de verrouillage (26) de la partie femelle (3) en position de verrouillage.

8. Ensemble de porte selon l'une des revendications précédentes, dans lequel, en position de verrouillage, les parties femelle et mâle sont disposés de sorte à annuler tout moment de flexion sur le dispositif de verrouillage.

9. Aéronef muni d'un ensemble de porte selon l'une des revendications précédentes, la partie fixe de l'ensemble de porte étant une partie de fuselage de l'aéronef.
